# EUROPÄISCHE PATENTANMELDUNG

(11) **EP 0 795 453 A2**
(43) Veröffentlichungstag der Anmeldung: **17.09.1997**
(21) Anmeldenummer: 97103448.3
(22) Anmeldetag: 03.03.1997
(51) Int. Cl.: B61H 7/08, B61H 15/00

(54) **Vorrichtung zur automatischen Rollenverschleissnachstellung**

(30) Priorität: 12.03.1996 DE 19609650
(71) Anmelder: KNORR-BREMSE Systeme für Schienenfahrzeuge GmbH, 80809 München (DE)
(72) Erfinder: Graf, Thomas, 86633 Neuburg/Donau (DE)

(57) **Zusammenfassung**

Die durch die Erfindung dargelegte Vorrichtung (1) zur automatischen Rollenverschleißnachstellung erlaubt, insbesondere in Schienenfahrzeugen, den neuartigen Einbau einer magnetischen Bremseinrichtung, welche nach der Erfindung durch wenigstens eine Laufrolle (2) gegenüber der Horizontalen (h) abgestützt ist. Der an der bzw. den Laufrollen (2) auftretende Verschleiß, welcher sich in einer Durchmesserabnahme der Laufrolle(n) (2) äußert, wird durch eine Nachstelleinrichtung (3) nivelliert, wodurch der - für eine über der Betriebszeit gleich bleibende Bremsleistung - nötige Luftspalt zwischen Bremseinrichtung und der Horizontalen (h) ebenfalls nachgestellt wird. Die Nachstellung erfolgt dadurch, daß die Laufrollen (2) durch einen Schlitten (9), der über eine Betätigungsvorrichtung (5) beaufschlagt wird, verschoben werden. Die Rückhubeinrichtung (4) drückt den Schlitten (9) mit den Laufrollen (2) in eine durch die Rückhubbegrenzungseinrichtung (7) festgelegte Position zurück, so daß sich der erforderliche Luftspalt zwischen Bremseinrichtung und der Horizontalen (h) wieder einstellt.

## Beschreibung

Die Erfindung betrifft eine Vorrichtung zur Aufnahme einer magnetischen Bremseinrichtung, insbesondere einer Wirbelstrombremse oder einer Permanentmagnetbremse eines Schienenfahrzeugs.

Einbauvarianten von magnetischen Bremseinrichtungen in Schienenfahrzeugen, insbesondere von Wirbelstrombremsen, sind bereits bekannt. Die bisher bekannten Anordnungsmöglichkeiten von Bremseinrichtungen in Schienenfahrzeugen - wie aus der deutschen Patentschrift DE-OS 2 035 781 zu entnehmen ist - zeichnen sich dadurch aus, daß die Bremseinrichtungen über Abstandhaltemittel fest mit dem ungefederten Teil des Schienenfahrzeugs verbunden sind und somit der Abstand zwischen der Bremseinrichtung und der Horizontalen annähernd konstant gehalten wird.

Bei Bremsungen werden große Kräfte und Momente in die Bremseinrichtung eingeleitet, woraus sich zwangsläufig nicht zu vernachlässigende Deformationen ergeben. Um dennoch den Luftspalt zwischen den Bremseinrichtungen und der Horizontalen auch während des Bremsvorganges möglichst konstant zu halten, ist es erforderlich, daß die Bremseinrichtungen über ein möglichst stabil und somit steif ausgeführtes Tragwerk mit dem Fahrzeug verbunden werden. Ein solches Tragwerk muß daher für jeden Fahrzeugtyp, der mit einer solchen magnetischen Bremseinrichtung ausgestattet werden soll, neu- bzw. umkonstruiert werden.

Um eine ausreichende Stabilität solch eines Tragwerks zu erreichen, ist regelmäßig ein sehr hoher konstruktiver Aufwand nötig. Dies führt zu hohen Entwicklungs- und Montagekosten. Selbst die Anwendung von Leichtbaumethoden in der Tragwerkskonstruktion führt aufgrund der erforderlichen Steifigkeit des Tragwerks zu einem unerwünscht hohen Gewicht der Anordnung. Um eine möglichst gleichbleibend und hohe Bremsleistung zu realisieren, muß ein Ziel der Konstruktion sein, den Luftspalt zwischen Bremseinrichtung und Schienenoberfläche möglichst gering und während aller Betriebszustände möglichst konstant zu halten.

Der Erfindung liegt daher die Aufgabe zugrunde, bei geringem Gewicht und großer Steifigkeit eine alternative Abstützung bzw. Befestigung von Bremseinrichtungen am Fahrzeug zu ermöglichen und den Luftspalt zwischen Bremseinrichtung und der Horizontalen unter allen auftretenden Betriebszuständen so konstant klein als möglich zu halten.

Diese Aufgabe wird bei einer gattungsgemäßen Vorrichtung nach Patentanspruch 1 dadurch gelöst, daß ein Gehäuse, welches die Bremseinrichtung aufnimmt, durch wenigstens eine Laufrolle gegenüber der Horizontalen - insbesondere gegenüber der Schienenoberseite - abgestützt wird.

Es hat sich als vorteilhaft herausgestellt, aufgrund der großen, während des Bremsvorganges in die Bremseinrichtung eingeleiteten Abstützmomente und der daraus resultierenden radialen Reaktionskräfte auf die Laufrollen, eine Nachstelleinrichtung - gem. Patentanspruch 2 - zum Ausgleich der an den Laufrollen belastungsbedingt auftretenden Materialabtragung in die Konstruktion mit aufzunehmen. Hierdurch ist es möglich, eine verschleißbedingte Veränderung des Luftspaltes zwischen der Bremseinrichtung und der Horizontalen, insbesondere der Schienenoberseite, zu nivellieren bzw. zu verhindern und somit eine gleichbleibende, maximale Bremsleistung über der Betriebszeit der Bremseinrichtung zu realisieren.

Zudem kann durch die Erfindung der Luftspalt kleiner und somit exakter voreingestellt werden. Ein kleinerer Luftspalt zwischen Bremseinrichtung und Schienenoberseite ermöglicht insgesamt eine höhere Bremsleistung.

Durch eine nach der Erfindung angeordneten Bremseinrichtung ist ein herkömmliches Tragwerk zur Befestigung der Bremseinrichtung am Fahrzeug nicht mehr nötig und dadurch eine Reduzierung des Materialaufwandes und der Masse möglich. Da die Konstruktion herkömmlich verwendeter, sehr steifer und an das jeweilige Fahrzeug angepaßter Tragwerke sehr kostenintensiv ist und diese durch die Anwendung der Erfindung überflüssig werden, ergeben sich auch Kostenvorteile.

Durch die Vermeidung eines aufwendigen Tragwerks zur Fixierung der Bremseinrichtung am Fahrzeug kann eine nach der Erfindung eingebaute Bremseinrichtung insgesamt kompakter, d.h. auf geringerem Einbauraum realisiert werden. Eine solche kompakte, abgeschlossene Bauweise kann zuverlässig auch unter rauhen Umgebungsbedingungen über viele Jahre hinweg eingesetzt werden, ohne daß hohe Wartungskosten anfallen.

Eine nach der Erfindung angeordnete Bremseinrichtung ist bei Schienenfahrzeugen weitgehend unabhängig vom Radabstand und vom Drehgestelltyp einsetzbar und somit nach dem Baukastenprinzip vielseitig verwendbar.

Nach Patentanspruch 3 weist die Nachstelleinrichtung als charakteristische konstruktive Elemente eine Rückhubeinrichtung, eine Betätigungsvorrichtung, eine Abstützvorrichtung und eine Rückhubbegrenzungseinrichtung auf, wobei nach Patentanspruch 4 die Laufrolle durch eine Achse in einem translatorisch beweglichen Schlitten gelagert ist. Bei verschleißbedingter Verkleinerung des Rollenradius wird der Schlitten, in dem die Achse der Rolle fixiert ist, durch die Betätigungsvorrichtung soweit in einer geneigten Führungsbahn verschoben, bis - ab einer bestimmten Schlittenposition - das weitere Verschieben des Schlittens durch eine Abstützeinrichtung verhindert wird.

Nach Beendingung der Aktivierung der Betätigungseinrichtung bewirkt die Rückhubeinrichtung eine teilweise Rückführung des Schlittens um einen durch eine Rückführbegrenzungseinrichtung festgelegten Weg, wodurch sich wieder der gewünschte Luftspalt zwischen Bremseinrichtung und der Horizontalen einstellt und der Rollenverschleiß ausgeglichen wird.

Vorteilhafte Ausgestaltungen und Weiterbildungen sind in den weiteren Patentansprüchen aufgeführt.

Die Erfindung ist nachfolgend unter Bezugnahme auf die beigefügten Zeichnungen erläutert:
Figuren 1 und 2 zeigen ein Ausführungsbeispiel einer nach der Erfindung ausgebildeten Vorrichtung zur automatischen Rollenverschleißnachstellung. In Figur 1 ist eine neuwertige, nicht verschlissene Laufrolle dargestellt, Figur 2 zeigt die Vorrichtung mit verschlissener - also verkleinerter - Laufrolle im bereits nachgestellten Zustand.
In den Figuren 3 bis 6 ist beispielhaft die geometrische Umsetzung der Rollenverschleißnachstellung dargestellt.

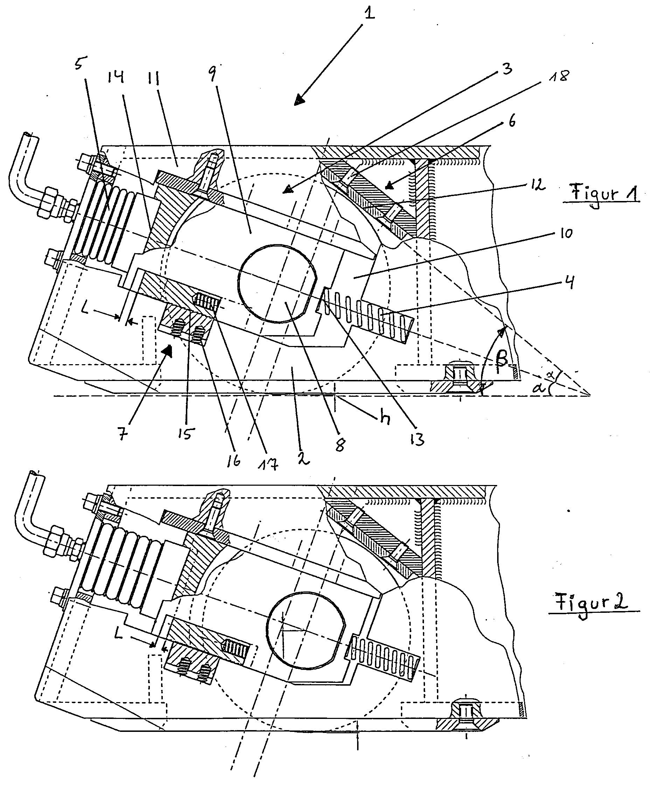

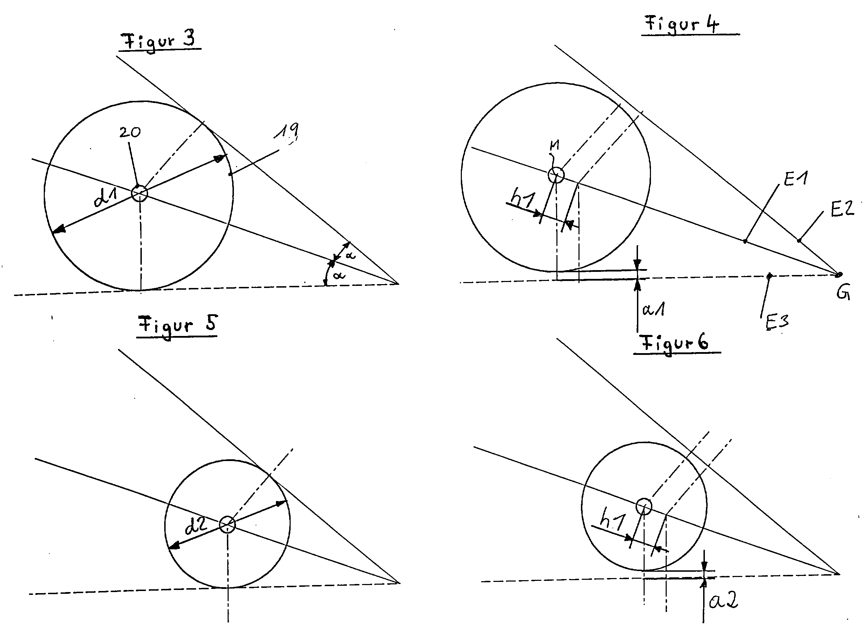

Figur 1 zeigt eine Vorrichtung 1 zur automatischen Rollenverschleißnachstellung einer Wirbelstrombremse mit einer neuwertigen, nicht verschlissenen Laufrolle. Eine Bremseinrichtung (in Figur 1 und 2 nicht dargestellt) ist im eingebauten Zustand mit einem Gehäuse 11 verbunden, wobei das während des Bremsvorganges eingeleitete Bremsmoment bzw. die hieraus resultierende Kraft am Gehäuse 11 durch die Laufrolle 2 gegenüber der Horizontalen h abgestützt wird (im Beispiel entspricht die Horizontale h der Schienenoberfläche). Die Nachstelleinrichtung 3 dient zum Ausgleich des Materialabtrags an den Laufrollen 2: die Rückhubeinrichtung 4 ist in den Figuren 1 und 2 als Feder und die Betätigungseinrichtung 5 als als Hydraulikzylinder ausgeführt. Die durch die Stellschrauben 18 justierbare Abstützfläche 12 ist Bestandteil der Abstützeinrichtung 6, welche im Gehäuse 11 angebracht ist und um den Winkel α gegen die Längsachse des Schlittens 9 geneigt ist. Die Laufrolle 2 ist drehbar durch eine Achse 8 - die im Schlitten 9 fixiert ist - gelagert und somit translatorisch, entlang der bezüglich der Horizontalen h, insbesondere der Schienenoberfläche, um den Winkel α geneigten Schlittenlängsachse verschiebbar.

Geführt wird der Schlitten 9 in einer im Beispiel als rechteckiger Zylinder ausgebildeten Führungsbahn 10, welche ebenfalls um den Winkel α gegen die Horizontale geneigt ist. Die Rückhubeinrichtung 4 ist im ausgeführten Beispiel zwischen dem unteren Ende 13 des Schlittens 9 und des Gehäuses 11 achsparallel zur Führungsbahn 10 angeordnet. Hat der Durchmesser der Rolle 2 verschleißbedingt abgenommen, so verringert sich auch der Luftspalt zwischen dem Gehäuse 11 und der Horizontalen h, der Abstand zwischen der Rollenoberfläche und der Abstützfläche 12 hat sich allerdings vergrößert (dies ist in den Figuren 1 und 2 nicht erkennbar, da Figur 1 die Laufrolle 2 im neuwertigen und Figur 2 die Laufrolle 2 im verschlissenen aber bereits nachgestellten Zustand zeigt).

Um eine optimale Bremsleistung zu erzielen, soll der Luftspalt möglichst konstant gehalten werden; es muß also der Schlitten 9 samt Laufrolle 2 in Figur 1 nach rechts unten entlang der Schlittenachse verschoben werden, also entgegen der Wirkungsrichtung der Rückhubeinrichtung 4; die Verschiebung des Schlittens 9 erfolgt durch die Betätigungseinrichtung 5, die am oberen Ende 14 des Schlittens 9 parallel zur Führungsbahn 10 so angeordnet ist, daß der Schlitten und damit auch die Laufrolle 2 nach unten gedrückt wird, soweit, bis die Laufrolle 2 an der Abstützfläche 12 anliegt. Nach der Deaktivierung der Betätigungsvorrichtung 5, wird der Schlitten 9 samt Laufrolle 2 um eine vordefinierte Länge L entlang der Schlittenlängsachse durch die Rückhubeinrichtung 4 zurückgedrückt und dadurch der durch den Verschleiß der Rolle veränderte Luftspalt nachgestellt. Die Länge L, um die der Schlitten zurückverschoben werden kann, ist durch die Ausführung der Rückhubbegrenzungseinrichtung 7 festgelegt und somit kann - wenn die Verriegelung 15 der Rückhubbegrenzungseinrichtung 7 stufenlos arbeitet - der Luftspalt konstant gehalten werden. Die Verriegelung 15 arbeitet in den Figuren 1 und 2 nicht stufenlos sondern ist als gerasterte, durch die Federn 16 und 17 belastete Verriegelung ausgeführt.

Alternativ zu der in den Figuren 1 und 2 als Feder dargestellten Rückhubeinrichtung 4 könnte auch ein Federpaket, ein Hydraulik- oder auch ein Pneumatikzylinder verwendet werden. Die Betätigungseinrichtung 5 könnte abweichend zu den Figuren 1 und 2 auch elektrisch oder pneumatisch ausgeführt sein. Ebenso könnte die federbelaste Rückhubbegrenzungseinrichtung 7 der Figuren 1 und 2 durch eine stufenlos arbeitende Verriegelung, welche beispielsweise mit selbsthemmender Keilwirkung arbeitet, ersetzt werden.

In den Figuren 3 bis 6 ist beispielhaft die geometrische Umsetzung der Rollenverschleißnachstellung dargestellt:

Die die Rolle 19 ist auf der Achse 20 gelagert. Die Ebene E1 stellt die winkelhalbierende Ebene der Ebenen E2 und E3 dar. Die Achse 20 mit Rolle 19 ist entlang der Ebene E1 translatorisch verschiebbar. Die Einstellung der Rolle im Neuzustand mit dem Durchmesser d1 ist in den Figuren 3 bis 4 dargestellt: dabei wird die Rolle 19 entlang der Ebene E1 soweit nach rechts verschoben, bis ihr Umfang an der Ebene E2 anliegt (Figur 3). Darauf erfolgt ein definierter Rückhub h1 entlang der Ebene E1, so daß die Rolle 19 wieder von der Ebene E2 abhebt und frei drehbar ist. Dadurch stellt sich der Abstand a1 zwischen Rolle 19 und Ebene E3 ein (Figur 4). Die Nachstellung der verschlissenen Rolle 18 mit dem Durchmesser d2 ist in den Figuren 5 und 6 dargestellt. Die Rolle 19 wird wiederum entlang der Ebene E1 so weit nach rechts verschoben, bis ihr Umfang an der Ebene E2 anliegt. Dann erfolgt der Rückhub h1. Der sich einstellende Abstand a2 zwischen Rolle 19 und Ebene E3 ist genauso groß wie der ursprüngliche Abstand a1 (Figur 6).

### Bezugszeichenliste

### 1. Figuren 1 und 2:

- 1: Vorrichtung
- 2: Laufrolle
- 3: Nachstelleinrichtung
- 4: Rückhubeinrichtung
- 5: Betätigungsvorrichtung
- 6: Abstützeinrichtung
- 7: Rückhubbegrenzungseinrichtung
- 8: Achse
- 9: Schlitten
- 10: Führungsbahn
- 11: Gehäuse
- 12: Abstützfläche
- 13: Unteres Schlittenende
- 14: Oberes Schlittenende
- 15: Verriegelung
- 16: Feder
- 17: Feder
- 18: Stellschraube

### 2. Figuren 3 bis 6:

- 19: Rolle
- 20: Achse
- E1: Winkelhalbierende Ebene
- E2: um den Winkel 2α gegen E3 geneigte Ebene
- E3: Horizontalebene
- d1: Durchmesser der neuwertigen Rolle
- d2: Durchmesser der verschlissenen Rolle
- h1: Rückhubweg
- a1: Luftspalt
- a2: Luftspalt
- α: Zwischenwinkel der Ebenen

## Patentansprüche

1. Vorrichtung (1) zur Aufnahme einer magnetischen Bremseinrichtung, insbesondere einer Wirbelstrombremse oder einer Permanentmagnetbremse eines Schienenfahrzeugs, **dadurch gekennzeichnet**, daß ein Gehäuse (11), welches die Bremseinrichtung aufnimmt, durch wenigstens eine Laufrolle (2) gegenüber der Horizontalen (h) - insbesondere gegenüber der Schienenoberseite - abgestützt wird.

2. Vorrichtung nach Anspruch 1, **gekennzeichnet durch** eine Nachstelleinrichtung (3) zum Ausgleich der an den Laufrollen (2) belastungsbedingt auftretenden Materialabtragung.

3. Vorrichtung nach Anspruch 2, **gekennzeichnet dadurch**, daß die Nachstelleinrichtung (3) eine Rückhubeinrichtung (4), eine Betätigungsvorrichtung (5), eine Abstützvorrichtung (6) und eine Rückhubbegrenzungseinrichtung (7) aufweist.

4. Vorrichtung nach Anspruch 3, **dadurch gekennzeichnet**, daß die Laufrolle (2) durch eine Achse (8) in einem translatorisch beweglichen Schlitten (9) gelagert ist.

5. Vorrichtung nach Anspruch 4, **dadurch gekennzeichnet**, daß der Schlitten (9) in einer Führungsbahn (10), welche sich im Gehäuse (11) befindet, angeordnet ist.

6. Vorrichtung nach Anspruch 5, **dadurch gekennzeichnet**, daß die Führungsbahn (10) einen Winkel α zur Horizontalen bildet.

7. Vorrichtung nach Anspruch 6, **dadurch gekennzeichnet**, daß die Abstützeinrichtung (6) eine Abstützfläche (12) aufweist, die mit der Horizontalen einen Winkel β einschließt, der doppelt so groß wie der Winkel α ist.

8. Vorrichtung nach Anspruch 7, **dadurch gekennzeichnet**, daß die Rückhubeinrichtung (4) zwischen dem unteren Ende (13) des Schlittens (9) und des Gehäuses (11) z.B. achsparallel zur Führungsbahn (10) angeordnet ist.

9. Vorrichtung nach Anspruch 8, **dadurch gekennzeichnet**, daß die Betätigungsvorrichtung (5) am oberen Ende (14) des Schlittens (9) z.B. achsparallel zur Führungsbahn (10) so angeordnet ist, daß der Schlitten (9) und damit auch die Laufrolle (2) bei Betätigung der Betätigungsvorrichtung (5) soweit nach unten gedrückt wird, bis die Laufrolle (2) an der Abstützfläche (12) anliegt.

10. Vorrichtung nach Anspruch 9, **dadurch gekennzeichnet**, daß die Rückhubbegrenzungseinrichtung (7) zwischen dem Schlitten (9) und dem Gehäuse (11) so angeordnet ist, daß der Schlitten (9) und damit auch die Laufrolle (2) nach Betätigung der Betätigungseinrichtung (5) sich nur noch eine vorbestimmte Länge (L) von der Rückhubeinrichtung (4) zurückschieben läßt, so daß der Abstand des Gehäuses (11) zur Horizontalen (h) immer nahezu gleich bleibt.

11. Vorrichtung nach Anspruch 10, **dadurch gekennzeichnet**, daß die Rückhubbegrenzungseinrichtung (7) eine Verriegelung (15) und wenigstens eine Feder (16) aufweist.
